# EUROPEAN PATENT APPLICATION

(11) **EP 1 729 050 A1**
(43) Date of publication of application: **06.12.2006**
(21) Application number: 06252893.0
(22) Date of filing: 05.06.2006
(51) Int. Cl.: F16L 31/00

(54) **Ducting**

(30) Priority: 04.06.2005 GB 0511422; 22.02.2006 GB 0603475
(71) Applicant: NTC Ducting.Com Limited, Water Wheel Drive Swansea Vale Swansea SA7 0AF (GB)
(72) Inventor: Fahnrich, Oliver, NTC Ducting.Com Ltd, Swansea Vale Swansea SA7 0AB (GB)
(74) Representative: Gallafent, Antony Xavier

(57) **Abstract**

A ducting section comprises a flexible sleeve (2) and a flexible band (16) located at an end of the flexible sleeve (2), and the band (16) is compressible enabling insertion through an opening. The band (16) is then able to expand to its original shape such that the removal from the opening is prevented.

## Description

The present invention relates to a duct and in particular flexible ducts for conveying gases, powders or fine granules. Ductings have a wide variety of uses, for example, in high temperature applications such as machine building, granulate drying, exhaust gas extraction, and oil heating applications to low temperature applications such as ventilation ductings or air conditioning systems, such as those found in planes, tents/marquees, exhibition halls, shipyard ventilation and building drying.

As a specific example, ducts made from flexible heavy duty material are used by the military, especially in desert areas. Generally in our conditioning tents, these ducts are used, for example, to convey air produced by air conditioning units or to convey exhaust gases or the like.

The present invention provides a new ducting arrangement.

According to a first aspect of the present invention, there is a ducting section for conveying a fluidic load, said ducting section comprising a flexible sleeve and a resiliently flexible band located adjacent an end of said flexible sleeve which defines the cross sectional area of said ducting section, wherein said band is elastically compressible enabling insertion through an opening of a body and arranged to expand to substantially its original shape upon release, such that removal thereof from said opening is prevented.

In accordance with the first aspect of the present invention, there is a method of connecting a ducting section for conveying a fluidic load to a body, said ducting section comprising a flexible sleeve and a resiliently flexible band located adjacent an end of said flexible sleeve which defines the cross sectional area of said ducting section, wherein said band is elastically compressible enabling insertion through an opening of a body and arranged to expand to substantially its original shape upon release, such that removal thereof from said opening is prevented.

Preferably, said body comprises a second ducting section. The second ducting portion preferably comprises a flexible sleeve and a band located adjacent an end of said flexible sleeve which defines the cross sectional area of said ducting section. The band is preferably resiliently flexible.

The flexible sleeve preferably comprises a connecting portion adjacent an end of said ducting section, wherein said connecting portion preferably comprises an elastically deformable material constructed of a material woven with perpendicular orientated strands. The elastically deformable material is preferably substantially only deformable in a direction radially to ducting section. The material is preferably Hypalon ® Grey. Preferably, the strands of the elastically deformable material of the connecting portion are arranged in a direction substantially at 45° to the longitudinal length of the sleeve. This provides the advantage that the material will substantially only elastically deform in a radial direction when the second sleeve is inserted into the connecting portion such that a simple effective joint may be achieved.

The ducting section preferably further comprises a resiliently flexible coil wherein said ducting section is defined by said resiliently flexible coil. The coil is preferably metallic. The coil is preferably fixedly attached to the outside surface of the fabric sleeve even more preferably said coil is sheathed in a band of fabric. The coil preferably comprises a plurality of turns wherein the pitch of the turns is less adjacent an open end of the ducting section than at a point closer to the central point of the longitudinal direction of the ducting section.

The sleeve may have at least one seam wherein at least a portion of the longitudinal length of said seam is covered by a strip of a flexible material. This advantageously provides extra strength at the join.

The seam is preferably sewn. The seam may be in a longitudinal direction to the ducting section, or alternatively substantially circumferential to the ducting section.

The ducting section may be compressed in a longitudinal direction, and further comprises means to retain at least a circumferential portion of said ducting section in a compressed position. The retaining means is preferably a hook and loop type mechanism.

According to a second aspect of the present invention, there is provided a ducting section for connecting to an open end of at least one other ducting section, said ducting section comprising a flexible sleeve and a resiliently flexible coil, wherein said ducting section is defined by said resiliently flexible coil, said coil comprising a plurality of turns wherein the pitch of the turns is less adjacent an open end of said ducting section than at a point closer to the central point of the longitudinal direction of the ducting section.

The flexibility of the duct enables ease of manipulation, for example allowing the duct to bend round corners. The resiliently flexible coil strengthens the ducting section and inhibits inward collapse of the ducting section thereby maintaining the shape. The provision of a reduced decreased coil pitch at either a permanent or releasable join between the ducting sections advantageously strengthens the join. The pitch of the coil preferably gradually decreases towards an end of the ducting section.

The elastic properties of the coil may vary along its length. This provides that different parts of the ducting section may be more or less susceptible to inward collapse depending on usage of the ducting section. For example, part of the coil may comprise a metal wire and another part may comprise a plastic wire. The plastic wire typically deforms more readily under stress than the metal wire.

The coil is preferably attached to the outer surface of the duct, typically by stitching. The coil preferably comprises wire, and said wire is preferably sheathed in a band of fabric. The fabric sheathing the wire is typically a tough, fray resistant fabric. The diameter of the coil may vary along the length of the coil (typically between 1mm to 5mm diameter).

The sleeve may have at least one seam wherein at least a portion of the longitudinal length of said seam is covered by a strip of a flexible material. This advantageously provides extra strength at the join.

The seam is preferably sewn. The seam may be in a longitudinal direction to the ducting section, or alternatively substantially circumferential to the ducting section.

The ducting section may be compressed in a longitudinal direction, and further comprises means to retain at least a circumferential portion of said ducting section in a compressed position. The retaining means is preferably a hook and loop type mechanism.

According to a third aspect of the present invention, there is a ducting section for conveying a fluidic load, said ducting section comprising a flexible fabric sleeve, said sleeve having at least one seam wherein at least a portion of the longitudinal length of said seam is covered by a strip of a flexible material.

The seam is preferably sewn. The seam may be in a longitudinal direction to the ducting section, or alternatively substantially circumferential to the ducting section. The flexible covering material preferably covers the entire length of the seam, and provides the advantage that the seam is strengthened plus provides a barrier to abrasion of the seam.

According to a fourth aspect of the present invention, there is a ducting section for conveying a fluidic load comprising an elongate flexible sleeve, said ducting section being compressible and extendable in a longitudinal direction to said ducting section, said ducting section further comprising means to retain said ducting section at a required length.

The retaining means preferably comprises a strip of material which removably attaches to at least a portion of an outer surface of the ducting section. The strip of material preferably has a surface portion comprising a book structure and enables interaction with a loop type arrangement on a outer surface portion of the ducting section. The advantage of the length adjusting means is that either the entire length of the ducting section may be reduced, or a compressive force may be applied at one specific portion of the circumference of the ducting section, thereby reducing the longitudinal length at substantially that position only. This causes the inlet and outlet of the ducting section to be at different orientations, to enable, for example, the ducting section to be maintained at an orientation to pass around corners.

A portion of the strip of material is preferably permanently attached substantially adjacent the end of the ducting section, even more preferably onto the coil sheathing. The remaining non-attached portion of the strip may then removably attach to the coil sheathing. Alternatively, if the angle of the tube is required to be altered, then a strip may be incorporated at any point in the length of the tube such that the angle of the tube is held at a required orientation.

According to a fifth aspect of the present invention, there is a connector for connecting a ducting section to a substantially rigid tube, the connector comprising a collar arranged and configured to be mounted concentrically relative to said tube, and a plurality of deformable rods extending substantially longitudinally beyond an end of said collar.

In accordance with the fifth aspect of the present invention, there is a method of connecting a ducting section to a substantially rigid tube, the method comprising the steps of providing a connector mounted concentrically relative to said tube, said connector and said tube being inserted into an open end of said ducting section, and the deformable rods of said connector are folded around the rim defining the open end of the ducting section to rest substantially longitudinally adjacent the outer wall of the ducting section.

There is preferably further provided a means to clamp the rods substantially adjacent the outer wall of the ducting section. The means to clamp the rods preferably comprises a compressible band. The deformable rods are preferably metal strips. Metals, such as steel, provide suitable properties for this purpose as are elastically deformable to a small degree, until they are folded at which time they plastically deform into the required position. The rigid tube may comprise protrusions on the outer surface, arranged to cooperate with the ducting section and/or connector, thereby increasing resistance to separating of the ducting section from the tube.

According to a sixth aspect of the present invention, there is a ducting for conveying a fluidic load, said ducting comprising a flexible sleeve wherein at least part of said sleeve is coated with a polyurethane material.

Use of a polyurethane coating on a ducting provides significant benefits over generally PVC ducting. The major limitation of non-coated PVC ducting is that in an increased temperature applications, plasticizers in the PVC migrate to the air outside the ducting at room temperature. The higher temperature that is present in the ducting, the higher the rate of migration of the plasticizer. Plasticizers migrating in this manner have an unpleasant smell, and are potentially dangerous as the fumes gather at the top of a structure and people have fallen unconscious on ladders whilst working in this environment. The effect on the PVC ducting of losing the plasticizer is the material becomes hard and unusable and will eventually tear. Further advantages of a polyurethane coating is the ducting is virtually odour free as no plasticizers have to be used in the polyurethane structure, and an improved temperature rating of-35°C to 130°C is achieved compared to a temperature rating of between - 20°C and 80°C for PVC. An additional benefit of coating a fabric with polyurethane is that the optimal properties of both materials may be utilised.

The polyurethane coating is preferably provided on the outer surface of the flexible sleeve. However, alternatively, a polyurethane coating may be provided on the inner surface of the sleeve. Preferably, both inside and outside surfaces of the sleeve are covered with polyurethane material. The sleeve is preferably made of a polyamide material. A protection means is preferably provided on the outer surface of the sleeve to protect the outer surface of the sleeve. The protecting means preferably comprises a wearstrip, the wearstrip comprising a band of material fixedly attached to the sleeve. The wearstrip may further comprise a resiliently flexible band wherein the band acts to maintain the shape of the sleeve. The protecting means is preferably constructed of a polypropylene material. Alternatively, the protecting means generally comprises a PVC material, however any suitable material may be utilised.

Also according to a sixth aspect of the present invention, there is a ducting section when in use in an airconditioning system comprising a flexible sleeve wherein at least part of said sleeve is coated with a polyurethane material.

Also according to a sixth aspect of the present invention, there is a method of manufacturing a ducting for conveying a fluidic load, said ducting comprising a flexible sleeve, and coating at least part of said sleeve with a polyurethane material.

The present invention will now be described by way of example only with reference to the accompanying drawings in which:
Figure 1 is a schematic side view of a ducting section according to an exemplary embodiment of the present invention; and
Figure 2 is a schematic side view of a ducting section according to another exemplary embodiment of the present invention, connected to a rigid tubing section.
Figure 3 is a schematic end view of a ducting according to an exemplary embodiment of a sixth aspect of the present invention.

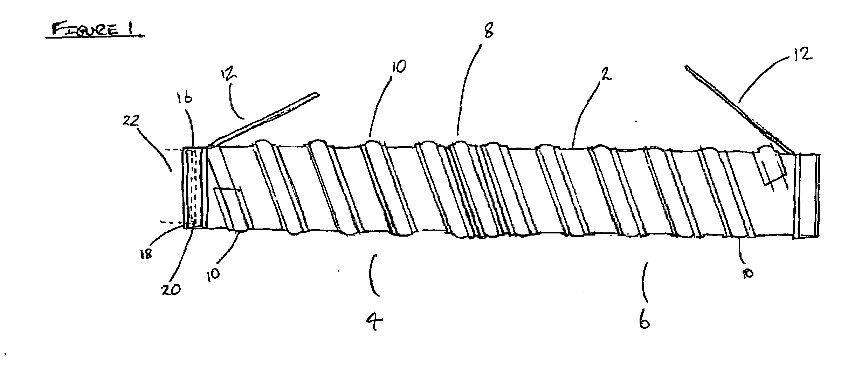

Referring to Figure 1, there is a schematic side view of a ducting section according to an exemplary embodiment of the present invention. The ducting section generally comprises a flexible sleeve 2, comprising two separate tubular sections 4, 6. There is a permanent join 8 is at the centre of the diagram, permanently connecting two ducting sections. Each of the sections 4, 6 comprise a two ply (two layers) of coated or non-coated fabric with an insulating material therebetween. Alternatively, the insulating material may not be present, and in a further alternative embodiment, there may be three or four layers of material with no insulating material.

A strengthening coil (not visible in Figure 1) is attached to the outer surface of the flexible sleeve 2 and is sheathed in a band of fabric 10 which is stitched to the outer surface of the ducting. The coil is wire, and the diameter of the wire may vary along the length of the coil. This may be utilised if increased strength is required in specific areas of the ducting. The band of fabric 10 further provides a mechanism for reduced wear of the coil by providing a protective sheath.

The strengthening coil has a number of turns depending on the strength required. The pitch of the turns may decrease at the join between the ducting sections, providing increased strength towards a j oint. Additionally or alternatively, a strip of material may be attached to the ducting sections (typically by stitching) to substantially cover the join between the ducting sections. The coil may alternatively be constructed of other materials such as polymers to provide alternative strength and elasticity of the ducting. Furthermore, the thickness of the coil may be altered to provide increased strength in a preferred location.

The single flexible sleeve typically comprises a flexible material folded and joined to itself by stitching resulting in the production of a longitudinal seam. A strip of material is preferably attached to the ducting (typically by stitching) to substantially cover the longitudinal join of the ducting. This provides a strength benefit and reduces disruption of gas flow through the ducting. This also reduces the chance of failure of the seam to outer abrasion.

As indicated previously, the pitch of the coils decreases towards a join 8 such that strength is not decreased adjacent a join. The join is provided by stitching, and a plurality of strips of material are provided attached to the tubes to cover the join and provide increased strength.

Fixedly attached adjacent an end of a ducting section is a strip of material. This strip of material 12 removably attaches to the band of fabric 10 covering the coil by a hook and loop mechanism. Alternatively, a separate band of material may be stitched to the band of fabric 10 providing the catch means. A suitable hook and catch mechanism is Velcro ®. The system works by the compression of the ducting adjacent the strip 12, which can then be retained in the desired position. This enables the ducting to be angled such that direction may be altered depending on requirements. If required, the entire length of the ducting may be decreased, or alternatively one portion of the longitudinal length of the circumferential portion may be reduced thereby creating an angle in the ducting. The hook and catch mechanism may be located at any position along the longitudinal length of the ducting. It is envisaged that alternative mechanisms of retaining the longitudinal length of the ducting section at a predetermined position may be utilised, such as a clip type mechanism, or even a separate strip material not fixedly attached to any ducting section.

One ducting section may be removably attached to a further ducting section via a simple joining mechanism which provides significant strength as well as a tight seal to prevent escape of gases. A steel ring is sheathed within the end of the coated fabric sleeve. This may be independent of the coil or an integrally formed part of the coil. A band 16 of elastically deformable material such as any coated fabric is sewn to the sleeve, and a further steel ring 18 is sheathed within the end of the band 16. The steel ring 18 is substantially elastically deformable. The band 16 material is constructed of substantially perpendicularly orientated threads in a sheet form. To form the band 16, the material is cut at substantially 45° to the direction of the thread, and rolled into a band. The band is then more elastically deformable in the transverse direction to the ducting than the longitudinal direction to the tube. This enables a ring of a second ducting section of substantially the same diameter to be elastically compressed and inserted through the first ring, and then return to its original shape so as to lock itself within the band. The ring therefore provides a force against the inside surface of the band 16, the band 16 being able to elastically deform due to the direction of the weave, and thereby provide a seal with the ring. The adjoining ring 20 and second ducting section 22 are indicated in dashed lines in Figure 1.

In general, a duct comprises a plurality of ducting sections, each section generally being between 1 to 12 metres in length. The sections are typically joined together by stitching, unless a removable joint is required in which case an arrangement as described above is utilised, or alternatively for ease of logistics it becomes difficult to transport and fit long ducting sections. A strip of flexible material is preferably attached to the ducting sections to substantially cover the join between the tubes. This advantageously provides extra strength and abrasion resistance at the join.

The flexible material of the ducting may be of the type able to withstand high temperatures so that the ducting can be used to convey heated gases for example exhaust gas. Suitable materials include neoprene coated glass fabric, and polyurethane coated material such as polyamide (as described in more detail later). The strip of material used to substantially cover the join may be of silicone coated glass which can ideally also withstand high temperatures and is fray resistant. Alternatively the flexible sleeve may be a heavy duty substantially waterproof material and the ducting section may be used to convey gases produced by air conditioning systems. Suitable materials again include neoprene or polyurethane coated polyamide. The strip of material used to substantially cover the join may be of a polymer based material with a PVC coating. This type of material is suitably substantially waterproof and fray resistant.

In order to further increase strength and/or thermal capability of the ducting, a stainless steel flexible duct may be inserted inside the ducting, The stainless steel flexible duct is preferably constructed of interwoven strands thereby producing a flexible duct whilst providing high thermal resistance and significant strength. This addition may be used in these particular circumstances in particular wherever high temperature gases are conveyed.

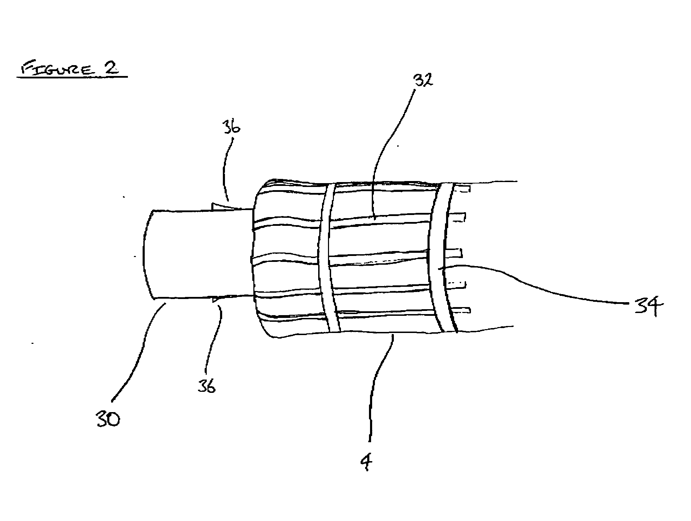

Referring to Figure 2, a ducting section 4 may also be arranged and configured to releasably connect to a rigid tube 30 rather than another ducting section. In this case, the joining means may comprise a collar portion (not shown) which slides onto the outer face of the rigid tube 30. The collar portion comprises a plurality of deformable metal strips 32 extending outwardly therefrom, which are folded around the rim defining the open end of the ducting section 4 and folded back to rest, substantially longitudinally adjacent the outer surface of the ducting section 4. Each strip 32 is folded in this manner, and then clamped onto the outer wall of the ducting section using a compressible band 34, thereby also clamping the ducting section onto the rigid tube 30. The band 34 is of any known type, and may be tightened to the desired degree. To aid increased clamping, protrusions 36 may be provided on the outer surface of the tube 30. These protrusions 36 may be of any shape or size, however in order to aid the insertion of the tube 30 into the ducting 4, a barb type arrangement may be utilised wherein insertion is relatively easy, but removal is prevented by the barb. In an alternative arrangement, the band 34 may be arranged to co-operate with the protrusions 36 on the tube 30, through the ducting section 4, thereby further increasing the resistance to the ducting section 4 and tube 30 separating accidentally.

To increase aesthetic appeal, a sleeve may be used to cover the join, and prevent tampering with the joint.

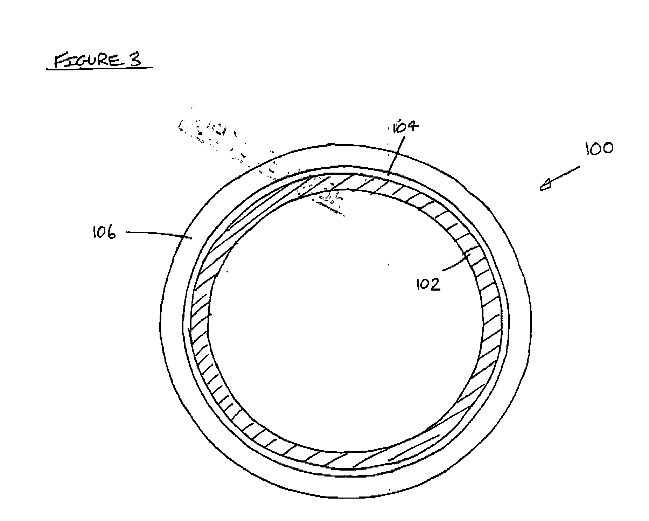

Referring to Figure 3, there is an end view of a ducting 100, the ducting comprising a sleeve 102 generally constructed of a fabric. The fabric is normally a polyamide material, however numerous alterations are envisaged such as nylon and polyester for example. The sleeve may be coated on the inner and/or outer surface with a layer of polyurethane 104 material. Figure 3 indicates coating on the outer surface only, however, it will be appreciated that there are significant benefits associated with providing a layer of polyurethane on both inner and outer surfaces to provide optimal properties as described earlier (i.e. reduced plasticizer migration).

On the outer surface of the polyurethane sleeve, there is provided a means to protect the ducting from excess wear, which also has the effect of maintaining the cross sectional area of the ducting. In order to achieve this protection, a wearstrip 106 comprising a band of tough material such as PVC or polypropylene is sewn,onto the outer surface of the sleeve. The wearstrips 106 may cover a resiliently flexible band (not visible in Figure 3) such as a metal curve or plastic strip to maintain a suitable cross sectional area. The wearstrips 106 are spaced at regular intervals along the sleeve 102, thereby aiding bending and turning of the ducting whilst retaining the cross sectional area and also providing wear resistance.

The present invention has been described by way of example only with reference to the accompanying drawings, but it will be appreciated by a person skilled in the art that variations and modifications can be made to the present invention without departing from the scope of the appended claims.

## Claims

1. , A ducting section for conveying a fluidic load, said ducting section comprising a flexible sleeve and a resiliently flexible band located adjacent an end of said flexible sleeve which defines the cross-sectional area of said ducting section, wherein said band is elastically compressible enabling insertion through an opening of a body and arranged to expand to substantially its original shape upon release, such that removal thereof from said opening is prevented.

2. A method of connecting a ducting section for conveying a fluidic load to a body, said ducting section comprising a flexible sleeve and a resiliently flexible band located adjacent an end of said flexible sleeve which defines the cross sectional area of said ducting section, wherein said band is elastically compressible enabling insertion through an opening of a body and arranged to expand to substantially its original shape upon release, such that removal thereof from said opening is prevented.

3. A ducting section according to any of claims 1 or 2, wherein said body comprises a second ducting section.

4. A ducting section according to claim 3, wherein said second ducting portion comprises a flexible sleeve and a band located adjacent an end of said flexible sleeve which defines the cross sectional area of said ducting section.

5. A ducting section according to claim 4, wherein said band is resiliently flexible.

6. A ducting section according to any preceding claim, wherein said flexible sleeve comprises a connecting portion adjacent an end of said ducting section, wherein said connecting portion preferably comprises an elastically deformable material constructed of a material woven with perpendicular orientated strands.

7. A ducting section according to claim 6, wherein said elastically deformable material is substantially only deformable in a direction radially to ducting section.

8. A ducting section according to claim 7, wherein said strands of the elastically deformable material of the connecting portion are arranged in a direction substantially at 45° to the longitudinal length of the sleeve.

9. A ducting section according to any preceding claim, further comprising a resiliently flexible coil wherein said ducting section is defined by said resiliently flexible coil.

10. A ducting section according to claim 9, wherein said coil is metallic.

11. A ducting section according to any of claims 9 or 10, wherein said coil is fixedly attached to the outside surface of the fabric sleeve.

12. A ducting section according to claim 11, wherein said coil is sheathed in a band of fabric.

13. A ducting section according to any of claims 9 to 12, wherein said coil comprises a plurality of turns wherein the pitch of the turns is greater adjacent the open end of the ducting section than at a point closer to the central point of the longitudinal direction of the ducting section.

14. A ducting section according to any preceding claim, wherein said sleeve has at least one seam wherein at least a portion of the longitudinal length of said seam is covered by a strip of a flexible material.

15. A ducting section according to claim 14, wherein said seam is sewn.

16. A ducting section according to any of claims 14 to 15, wherein said seam is in a longitudinal direction to the ducting section.

17. A ducting section according to any of claims 14 to 15, wherein said seam is substantially circumferential to the ducting section.

18. A ducting section according to any preceding claim, further comprising means to retain at least a circumferential portion of said ducting section in a compressed position.

19. A ducting section according to claim 18, wherein said retaining means is a hook and loop type mechanism.

20. A ducting section comprising a flexible sleeve and a resiliently flexible coil, wherein said ducting section is defined by said resiliently flexible coil, said coil comprising a plurality of turns wherein the pitch of the turns is less adjacent an open end of said ducting section than at a point closer to the central point of the longitudinal direction of the ducting section.

21. A ducting section according to claim 20, wherein the pitch of the coil gradually decreases towards an end of the ducting section.

22. A ducting section according to claims 20 to 21, wherein the coil is attached to the outer surface of the ducting section.

23. A ducting section according to any of claims 21 to 22, wherein said coil is sheathed in a band of fabric.

24. A ducting section according to any of claims 9 to 23, wherein the diameter of the coil varies along the length of the coil.

25. A ducting section according to any preceding claim, wherein said sleeve has at least one seam wherein at least a portion of the longitudinal length of said seam is covered by a strip of a flexible material.

26. A ducting section according to claim 25, wherein said seam is sewn.

27. A ducting section according to any of claims 20 to 26, further comprising means to retain at least a circumferential portion of said ducting section in a compressed position.

28. A ducting section according to claim 27, wherein said retaining means is a hook and loop type mechanism.

29. A ducting section for conveying a fluidic load, said ducting section comprising a flexible fabric sleeve, said sleeve having at least one seam wherein at least a portion of the longitudinal length of said seam is covered by a strip of a flexible material.

30. A ducting section according to claim 29, wherein said seam is sewn.

31. A ducting section according to claims 30 to 31, wherein said flexible covering material covers the entire length of the seam.

32. A ducting section for conveying a fluidic load comprising an elongate flexible sleeve, said ducting section being compressible and extendable in a longitudinal direction to said ducting section, said ducting section further comprising means to retain said ducting section at a required length.

33. A ducting section according to claim 32, wherein said retaining means comprises a strip of material, said strip being removably attachable to at least a portion of an outer surface of said ducting section.

34. A ducting section according to claim 33, wherein said strip of material has a surface portion comprising a hook structure thereby enabling interaction with a loop type arrangement on an outer surface portion of the ducting section.

35. A ducting section according to any of claims 33 to 34, wherein a portion of said strip of material is attached substantially adjacent the end of the ducting section.

36. A ducting section according to claim 35, wherein a portion of said strip of material is permanently attached to said coil sheathing.

37. A method of retaining a ducting section at a required length, the method comprising the steps of providing a ducting section for conveying a fluidic load comprising an elongate flexible sleeve, said ducting section being compressible and extendable in a longitudinal direction to said ducting section, said ducting section further comprising means to retain said ducting section at a required length.

38. A connector for connecting a ducting section to a substantially rigid tube, the connector comprising a collar arranged and configured to be mounted concentrically relative to said tube, and a plurality of deformable rods extending substantially longitudinally beyond an end of said collar.

39. A connector according to claim 38, wherein said deformable rods are metal strips.

40. A method of connecting a ducting section to a substantially rigid tube, the method comprising the steps of providing a connector mounted concentrically relative to said tube, said connector and said tube being inserted into an open end of said ducting section, and the deformable rods of said connector are folded around the rim defining the open end of the ducting section to rest substantially longitudinally adjacent the outer wall of the ducting section.

41. A method according to claim 40 further providing a means to clamp said rods substantially adjacent the outer wall of the ducting section.

42. A method according to claim 41 wherein said means to clamp the rods comprises a compressible band.

43. A method according to any of claims 40 to 43 wherein protrusions are provided on the outer surface of said tube, arranged to cooperate with the ducting section and/or connector.

44. A ducting for conveying a fluidic load, said ducting comprising a flexible sleeve wherein at least part of said sleeve is coated with a polyurethane material.

45. A ducting according to claim 44, wherein said polyurethane coating is provided on the outer surface of the flexible sleeve.

46. A ducting according to claim 44, wherein said polyurethane coating is provided on the inner surface of the flexible sleeve.

47. A ducting according to claim 44, wherein both inside and outside surfaces of the sleeve are covered with polyurethane material.

48. A ducting according to any of claims 44 to 47, wherein said sleeve is made of a polyamide material.

49. A ducting according to any of claims 44 to 48, further comprising protection means provided on the outer surface of the sleeve.

50. A ducting according to claim 49, wherein said protecting means comprises a wearstrip comprising a band of material fixedly attached to the sleeve.

51. A ducting according to claim 50, wherein said wearstrip further comprises a resiliently flexible band wherein the band acts to maintain the shape of the sleeve.

52. A ducting according to any of claims to 50 or 51, wherein the protecting means is constructed of a polypropylene material.

53. A ducting section when in use in an airconditioning system comprising a flexible sleeve wherein at least part of said sleeve is coated with a polyurethane material.

54. A method of manufacturing a ducting for conveying a fluidic load, said ducting comprising a flexible sleeve, and coating at least part of said sleeve with a polyurethane material.

55. A ducting section as substantially hereinbefore described according to any of claims 1 to 36 with reference to the accompanying drawings.

56. A ducting as substantially hereinbefore described according to any of claims 44 to 54 with reference to Figure 3 of the drawings.
